# EUROPEAN PATENT APPLICATION

(11) **EP 2 289 617 A1**
(43) Date of publication of application: **02.03.2011**
(21) Application number: 09011014.9
(22) Date of filing: 27.08.2009
(51) Int. Cl.: B01J 20/12, B01J 20/20, A23K 1/175

(54) **Toxin adsorbent**

(71) Applicant: Süd-Chemie AG, 80333 München (DE)
(72) Inventor: Ruf, Friedrich, Dr., 84184 Tiefenbach-Ast (DE); Sohling, Ulrich, Dr., 85356 Freising (DE); Haimerl, Agnes, 84098 Hohenthann (DE); Thomassiny Villaurrutia, Erik, 72410 Puebla (MX); Ortíz Niembro, José Antonio, 72590 Puebla (MX)
(74) Representative: Rembold, Hansjörg

(57) **Abstract**

The invention relates to an adsorbent comprising a clay material and activated carbon. Further the invention relates to a animal feed comprising such adsorbent and to the use of such adsorbent for the adsorption of microbial toxins, in particular mycotoxins.

## Description

The invention relates to an adsorbent, particularly for adsorption of toxins, to an animal feed comprising said adsorbent and to the use of said adsorbent for the adsorption of toxins.

Microorganisms, like fungi or bacteria, produce toxins that may be harmful to the health of humans as well as of animals.

Mycotoxins are toxic metabolites resulting from fungal infestation and growth on cereal grains and can result during growth, harvest, transportation or storage of the grains. Currently about 300 to 400 mycotoxins are known. Mycotoxins have a health hazardous effect on agricultural animals fed with infected grain but may secondarily also effect humans via the food chain. Mycotoxin contamination of cereal grains is a function of mold types, growing conditions during the crop season and storage practices. Aflatoxins are a mycotoxin of particular concern since aflatoxin B₁ is one of the most potent known hepatocarcinogens. Aflatoxin ingestion is invariably accompanied by a reduction in the feed intake and, consequently, a reduction in growth rate of pigs and other farm animals.

Some of the most important mycotoxins are:
Aflatoxins B₁, B₂, G₁ and G₂, which are formed by various *Aspergillus* species.

Ochratoxin, which is formed by *Aspergillus ochraceus* and *Penicillium viridicatum* and causes kidney damage.

Zearalenone, which is formed by *Fusarium graminearum*, which grows on corn, barley and wheat. It is an estrogen-like substance that causes fertility disorders and is suspected to be carcinogenic.

Fumonisine, which is formed by fungi of the genus *Fusarium* and has been implicated, among other things, in horse deaths.

T2 toxins and T2-like toxins (tricothecenes), which are formed by fungi of the genus *Fusarium.*

Moreover, there are a number of additional mycotoxins, like deoxynivalenol, diacetoxyscirpenol, patuline, citrinine, byssochlamic acid, sterigmatocystine, monilifomine, ergot alkaloids, ergochrome, cytochalasane, penicillinic acid, rubratoxins and other, which occur in concentrations that may cause health problems in feeds only in particular circumstances.

Endotoxins are toxins associated with certain bacteria. These toxins are not secreted in soluble form by live bacteria but form a structural component of a bacterial membrane. Endotoxins are released when bacteria are lysed. Endotoxins of Gram-negative bacteria are lipopolysaccharides consisting of a polysaccharide chain and a lipid moiety. These compounds produce fever and a lowering of blood pressure and effect activation of inflammation and coagulation already at very low concentration.

Enterotoxins are protein toxins produced and secreted from several bacterial organisms. They often are heat-stable, of low molecular weight and are water soluble. Ingestion of enterotoxins leads to secretory diarrhea within few hours. This is in particular dangerous to young animals, e.g. piglets, since watery diarrhea will effect dehydration of the animal within short time and may cause death of the animal when not treated adequately. Several microbial organisms contain the necessary enterotoxin to create such an effect, such as *staphylococcus aureus* or *escherichia coli.*

Several different toxins that are recognized as causal agents of health problems in humans and animals can be discovered in different feeds by the utilization of sensitive analysis methods. A number of studies have been able to demonstrate that several toxins can occur simultaneously in feeds. This simultaneous occurrence can significantly influence the toxicity of the toxins. In addition to acute damage to agricultural animals that receive mycotoxin-contaminated feed, health impairment in humans has also been discussed in the literature. Such impairment develops e.g. after long-term intake of foods, even weakly contaminated with mycotoxins.

In a study of suspected feed samples, aflatoxin, deoxynivalenone or fumonisine were found in more than 70 % of the investigated samples (cf. Understanding and Coping with Effects of Mycotoxins in Live Dog Feed and Forage, North Carolina Cooperative Extension Service, North Carolina State University; http:/www.ces.ncsu.edu/drought/dro-29.html).

In many cases, the economic effects due to reduced productivity of the animals, increased occurrence of disease because of immune suppression, damage to vital organs and an adverse effect on reproductivity are even greater than the effects caused by death of the animals by mycotoxin intoxication.

In US 5,149,549 is described a method for increasing the nutritional value of mycotoxin-contaminated animal feed ingested by an animal by feeding the animal a montmorillonite clay simultaneously with the mycotoxin-contaminated animal feed. The montmorillonite clay can be fed to the animal in any form, e.g. granular, powder, pellets and the like or can be admixed with other animal food or feed supplements, as long as the clay is present in the animal's stomach (digestive tract) at the same time as the mycotoxin-contaminated animal feed in an amount sufficient to absorb mycotoxins from the digestive tract of the animal and thereby aid the animal in metabolic absorption of nutrients from the contaminated animal feed.

US 2004/0028678 A1 discloses the use of an acid-activated layer silicate for adsorption of mycotoxins. The layer silicate is activated with less than 10 wt%, referred to absolutely dry layer silicate, of an acid at a temperature below 80°C.

US 6,827,959 discloses mycotoxin-adsorbents containing an organically modified (organophilic) layer silicate. Quaternary onium compounds with at least one long chain C₁₀ to C₂₂ alkyl group and at least one aromatic substituent are used for modification. As an alternative, the mycotoxin-adsorbents can contain a mixture of a non-organically modified layer silicate and a layer silicate that is at least 75 % organically modified in relation to its entire cation-exchange capacity.

The problem underlying the invention is to provide an adsorbent that absorbs not only aflatoxins, but also other toxins with high efficiency and, at the same time, may be prepared in a cost-effective manner so that it can be used in farm animal breeding. The adsorbent should further exhibit stable fixation of toxins under physiological conditions, i.e. little desorption of the bound toxins, as occur for example, in the digestive tract of animals.

This problem is solved by an adsorbent according to claim 1. Preferred embodiments of the absorbent are defined in the claims depending on claim 1.

It was surprisingly found that an adsorbent comprising a clay material and activated carbon absorbs a large variety of toxins, in particular different types of mycotoxins. The adsorbent has a high adsorption capacity and further shows low desorption of the adsorbed toxins under physiologic conditions as experienced e.g. in the digestive tract of animals. The adsorbent is not toxic to the animal and will pass the digestive tract unchanged while the toxins are firmly bound to it.

As a clay material comprised in the adsorbent, any natural, synthetic or modified clay known may be used. Preferably, phyllosilicates are used. Further preferred, layer silicates from the smectite group, the serpentine-kaolin group, the talc-pyrophyllite group, the group of attapulgite / palygorskite, vermiculite, illite, sepiolite and/or the mica-like layer silicates may be used. The layer silicates of the smectite group include the trioctahedral smectites, like saponite and hectorite, and the dioctahedral smectites, like montmorillonite, beidellite and nontronite. The serpentine-kaolin group includes, for example, chrysotile, antigorite, kaolinite and halloysite. Talc and pyrophyllite belong the to the talc-pyrophyllite group. The trioctahedral and dioctahedral chlorites belong to the chlorite group.

Montmorillonite clay, like smectites, in particular betonites as well as attapulgite and halloysite, as well as their naturally occurring mixtures are further preferred as layer silicates.

The clay material may also be an activated clay. Such activated clays may be obtained by treating a clay mineral with acid. Preferably, activation of the clay mineral is performed with a low amount of acid. According to an embodiment, the clay is activated by addition of 0.5 to 8 wt%, according to a further embodiment by adding 1 to 6 wt% and according to a still further embodiment by adding 1.5 to 4 wt% acid, based on absolutely dry clay and calculated as concentrated acid. The acid activation is performed in an usual manner as known to the skilled person. The activation may be performed e.g. by spraying an aqueous solution of the acid onto the clay mineral. As an acid for activating the clay mineral e.g. sulfuric acid, hydrochloric acid or phosphoric acid may be used. Further, also organic acids may be used, e.g. formic acid or acetic acid. Activation of the clay may also be performed by a dry process, e.g. by milling the clay together with a solid acid. Exemplary solid acids are citric acid and tartaric acid.

As a clay material may also be used an organophilic clay. Such organophilic clay may be obtained e.g. by modification of a layered silicate with an organic quaternary ammonium compound. Such quaternary ammonium compound may carry e.g. long-chain C₁₀ to C₂₂ alkyl groups and may also include aromatic substituents. The quaternary ammonium compound may comprise suitable anions, e.g. hydroxy ions, chloride ions, acetate ions etc.

The clay material preferably has a pore volume in the range from 0.1 to 0.5 cm³/g.

According to an embodiment of the invention the clay material has a pH value of less than 9.0, preferably about 4.0 to 8.0 in aqueous suspension.

According to a further embodiment, the clay material has an ion exchange capacity (IEC) of at least 25 meq/100 g.

The activated carbon preferably has a high specific surface area of at least 300 m²/g. According to an embodiment, the specific surface of the activated carbon is at least 800 m²/g. According to a further embodiment, the specific surface of the activated carbon is less than 2000 m²/g. According to a still further embodiment, the specific surface of the activated carbon is less than 1500 m²/g. Preferably, an activated carbon with a specific surface within the range of 900 to 1200 m²/g is used. According to an embodiment, an activated carbon rich in micropores is used. Accordingly, in an embodiment, an activated carbon is used, in which the specific surface contributed by micropores (0.8 - 2 nm) is within a range of 750 to 1200 m²/g, according to a further embodiment within a range of 850 to 1100 m²/g. The specific surface contributed by mesopores (2 - 50 nm) preferably is within a range of 5 to 30 m²/g, according to an embodiment within a range of 10 to 20 m²/g and the specific surface contributed by macropores (> 50 mm) preferably is within a range of 5 to 80 m²/g, according to an embodiment within a range of 10 to 50 m²/g.

According to a preferred embodiment, an activated carbon is used having a pore volume within a range of 0.6 to 1.5 cm³/g and according to an embodiment having a pore volume within a range of 0.7 to 1.1 cm³/g. The pore volume contributed by micropores is preferably selected within a range of 0.25 to 0.5 cm³/g. The pore volume contributed by mesopores is preferably selected within a range of 0.05 to 0.1 cm³/g and the pore volume comprised in micropores is preferably selected within a range of 0.3 to 0.5 cm³/g.

Basically, every type of activated carbon is suitable for use in the adsorbent. However, in particular when the additive is used as a feed additive, preferably an activated carbon is used that does not cause any health problems to animals fed with the adsorbent according to the invention.

According to an embodiment the adsorbent is provided in the form of a fine powder. The particle size of the clay material and of the activated carbon, independently from each other, is preferably selected within a range of 10 µm to 1 mm, according to a further embodiment within a range of 50 µm to 250 µm.

The adsorbents may be administered in any adequate form. According to an embodiment, the adsorbent is administered in the form of a powder. However, the adsorbent may also take any other form, and may be e.g. provided in granular form. Preferably, the adsorbent is provided in granular form to avoid segregation of the clay material and the activated carbon during handling of the adsorbent.

According to an embodiment, the activated carbon is comprised in the adsorbent in an amount of less than 10 wt% of the adsorbent (absolutely dry). According to a further embodiment, the activated carbon is comprised in an amount of less than 7 wt% and according to a still further embodiment in an amount of less than 5 wt%. To achieve a significant reduction in toxin exposure, an amount of at least 0.1 wt% of the adsorbent and according to an embodiment in an amount of at least 1 wt% is selected.

The quality of the adsorbent, e.g. the capacity for adsorbing toxins and the strength the toxins are bound to the adsorbent under physiological conditions, may be modified by carefully selecting the type of clay material comprised in the adsorbent.

According to an embodiment the clay material comprises bentonite and in a particularly preferred embodiment comprises calcium bentonite. Calcium bentonite is a clay mineral that may be mined from natural sources and that comprises calcium ions that may be exchanged through other ions, e.g. sodium ions. Preferably at least 50 % of the cation exchange capacity (CEC), more preferred at least 60 % of the CEC are formed by calcium ions. Calcium bentonite does not swell as much as e.g. sodium bentonite but has been proven to have a high capacity for toxin adsorption, in particular mycotoxin adsorption, and further shows only little desorption of toxins adsorbed by the calcium bentonite under physiological conditions, in particular under physiological conditions as present in the digestive tract of animals.

According to a further embodiment, the clay material comprises at least one clay mineral selected from the group of stevensite, saponite and kerolite.

Stevensite belongs to the smectite group and is a trioctahedral magnesium montmorillonite which has a defect structure, i.e., a deficiency in the total number of ions in octahedral coordination. Stevensite has a chemical formula of (Ca_{0.5}Na)_{0.33}(MgFe²⁺)₃Si₄O₁₀(OH)₂ · n H₂O. The exact composition of natural or synthetic stevensite may diverge from the empirical formula and further ions may be comprised in the mineral, e.g. by incorporation of metal ions on octahedral sites in the crystal lattice. Stevensite has an empirical formula of Ca_{0.15}Na_{0.33}Mg_{2.8}Fe²⁺_{0.2}Si₄O₁₀(OH)₂ · 4 H₂O. Stevensite is unstable and is converted to talc above a temperature of 275°C at water pressures of 690 bars. The addition of magnesium from hydrothermal solutions to the octahedral layer of stevensite converts the mineral to talc, concomitantly freeing interlayer cations and water. Stevensite has characteristic refraction peaks at lattice spacing of 15.5 (1), 4.53 (0.35), 1.518 (0.15) (I/I₀). When mined from natural sources, stevensite is often associated with other minerals, e.g. quartz, talc and hectorite.

Stevensite may be obtained as a mineral from natural sources or may be synthesized. A method for preparing synthetic stevensite is e.g. described in US 5,004,716. In particular when using a stevensite mineral from a natural source it is preferred to use a stevensite mineral having a magnesium oxide content of at least 15 % by weight, in particular at least 17 % by weight, more preferred at least 20 % by weight referred to absolutely dry stevensite mineral. According to an embodiment the magnesium oxide content of the stevensite mineral used in the adsorbent according to the invention is not more than 40 % by weight, in particular not more than 35 % by weight and according to a further embodiment is not more than 30 % by weight.

Saponite is a monoclinic mineral of the montmorillonite group. Its empirical formula is (½Ca,Na)_{0.33}(Mg,Fe²⁺)₃(Si,Al)₄O₁₀(OH)₂ · 4H₂O. It is soluble in H₂SO₄. Saponite may be obtained as a mineral from natural sources. Saponite has characteristic refraction peaks at lattice spacings of 12.3(1), 1.53(0.7), 3.1 (0.5) (I/I₀).

Kerolite is a metamorphic nickel bearing phyllosilicate mineral similar to talc and serpentine. It has an empirical formula of (Mg,Ni)₃Si₄O₁₀(OH)₂.H₂O. The official minerals status of kerolite is uncertain. Kerolite has an apparent basal spacing of 10.0 Å. It is characterized by slight swelling in ethylene glycol. As a mineral, kerolite is commonly mixed with either stevensite or serpentine. Kerolite is distinguished from talc by the extreme disorder of the layer stacking and its great ability to hold H₂O molecules and OH ions at surface imperfections.

Stevensite, saponite and kerolite may be used separately or in any combination with each other.

When using stevensite as a clay material in the adsorbent according to the invention it is preferred to use minerals that comprise at least 60 % by weight of stevensite phase. According to a further embodiment a clay mineral is used that comprises at least 70 wt% stevensite phase. The presence in the amount of stevensite may be determined e.g. by x-ray diffraction.

A "clay material" as used in the description is understood to be a clay in any form, i.e. a clay as mined from a natural source, a synthetic clay as well as a modified clay. A modified clay is understood to be a clay that has undergone a chemical treatment to modify its properties, e.g. an activation by treatment with acid or a clay that has been made organophilic by treatment with organic compounds, e.g. ammonium compounds bearing organic groups, or may have undergone a heat treatment to modify e.g. its swellability.

A clay mineral is understood to be clay as is e.g. mined from a natural source. Such clay minerals usually comprise several mineral phases associated to each other in varying amounts. Usually one mineral phase dominates the clay mineral and the clay mineral is designated by its main mineral phase.

A mineral phase is understood to be a pure mineral, i.e. a mineral having a homogenous crystal structure and a homogenous composition. Mineral phases have homogeneous properties. Several mineral phases may be associated to form a clay mineral.

Toxins differ in their structure and their chemical nature and, therefore, e.g. may have a different polarity or may carry e.g. basic groups or acidic groups and, therefore, have different acidity. Therefore, different types of e.g. mycotoxins do not necessarily show the same adsorption to an adsorbent. It now has been found that the adsorption of a broad variety of toxins to the adsorbent according to the invention may be improved by using a mixture of different types of clay minerals. Different clay minerals may have a different affinity for a given mixture of toxins, e.g. mycotoxins, and, therefore, by combining different clay minerals the spectrum of toxins adsorbed by the adsorbent may be broadened.

In a particularly preferred embodiment the adsorbent comprises calcium bentonite and at least one clay mineral selected from stevensite, saponite, and kerolite mineral.

According to an embodiment, a first clay mineral is comprised in the adsorbent in an amount of at least 30 % by weight (absolutely dry). According to a further embodiment, the first clay mineral is comprised in the adsorbent in an amount of at least 40 % by weight. According to a still further embodiment, the first clay mineral is comprised in the adsorbent in an amount of less than 80 % by weight.

As already discussed above, the adsorbent according to the invention may be tailored to a broad variety of mycotoxins by using a mixture of different clay minerals in the adsorbent.

According to a further embodiment, a second clay mineral is comprised in the adsorbent in an amount of less than 60 % by weight. According to a further embodiment, the second clay mineral is comprised in the adsorbent in an amount of less than 50 % by weight. According to a still further embodiment, the second clay mineral is comprised in the adsorbent in an amount of at least 20 % by weight.

As has been explained before any clay material may be used in the adsorbent according to the invention. However, in particular for use of the adsorbent for mycotoxins in animal feed it is preferred to use clay minerals that have not been modified. Therefore, according to a further preferred embodiment the clay minerals are not activated.

Preferably, the clay material is formed from naturally active clay minerals. Naturally active clay minerals are minerals that have not been activated or modified after mining but basically have only been dried and milled and adsorb toxins, e.g. mycotoxins.

As has been explained above, activated carbon from every source may be used in the adsorbent according to the invention. According to an embodiment the activated carbon is made from plant material, e.g. coconut shells, wood or similar material. Such activated carbon is available from commercial sources.

For some applications of the adsorbent it may be advantageous that the clay material comprises an organophilic clay material. The organophilic clay material preferably is used in an amount of less than 10 % by weight, according to a further embodiment ais used in an amount of less than 5 % by weight based on the adsorbent (absolutely dry). However, in particular for use as a toxin adsorbent in animal feed the clay material preferably does not comprise an organophilic clay material.

The organophilic clay material may be produced by methods known to the skilled person. For obtaining the organophilic clay material, a clay mineral may be treated with e.g. quaternary ammonium compounds or pyridinium compounds. Exemplary compounds for modifying the clay mineral is stearyl (tallow)-benzyldimethylammonium chloride (C₁₆-C₁₈ DMBA), coconut alkyldimethylbenzylammonium chloride (C₁₂-C₁₆ DMBA), dimethyllaurylbenzylammonium chloride (C₁₂-C₁₄ DMBA) and distearylmethylbenzylammonium chloride (C₁₆-C₁₈ DMBA).

The adsorbent according to the invention is in particular useful for adsorbing toxins, in particular mycotoxins from contaminated animal feed. A further object of the invention therefore is an animal feed comprising an adsorbent as described above. To obtain a distinct effect on health and weight of the animal the feedstuff to be treated with the adsorbent according to the invention may according to an embodiment comprise at least 400 ppmw toxin, according to a further embodiment may comprise at least 800 ppmw toxins. According to an embodiment, the amount of toxins comprised in the feedstuff before treatment with the adsorbent according to the invention is less than 3000 ppmw, according to a further embodiment less than 2000 ppmw.

The mycotoxins comprised in the feedstuff may be any type of mycotoxins and may e.g. be aflatoxins B₁, B₂, G₁, G₂, ochratoxin, zearalenone, fumonisine, T2 toxins and T2-like toxins (tricothecenes). Other mycotoxins may also be bound by the adsorbent and thereby be removed from the feedstuff, such as e.g. deoxynivalenol, diacetoxyscirpenol, patuline, citrinine, byssochlamic acid, sterigmatocystine, monilifomine, ergot alkaloids, ergochrome, cytochalasane, penicillinic acid, rubratoxin, trichothecenes and others, which occur in concentrations that cause health problems in feeds only in isolated circumstances.

The feed material comprised in the animal feed may be every feed material commonly used in animal breeding and may be preferably be plant material, e.g. cereals, or grains.

The adsorbent according to the invention has a high activity towards adsorption of toxins, in particular mycotoxins, endotoxins and enterotoxins. According to an embodiment, it is sufficient that the adsorbent is comprised in the animal feed in an amount of less than 5 % by weight. According to a further embodiment the amount of adsorbent comprised in the animal feed is less than 3 % by weight. According to a still further embodiment the adsorbent is comprised in the animal feed in an amount of at least 0.1 % by weight, according to a further embodiment in an amount of at least 1 % by weight.

A further object of the invention is directed towards use of an adsorbent as described above for the adsorption of toxins, in particular of mycotoxins, endotoxins and enterotoxins, in particular mycotoxins comprised in plant material used for feeding animals.

The invention will be explained in none-restrictive manner by means of the following examples.

The physical features used to characterize the adsorbent according to the invention are determined as follows:

### Ion Exchange Capacity (CEC)

The sample being investigated is dried over a period of 2 hours at 150°C. The dried sample is then made to react with a large excess of aqueous NH₄Cl solution for one hour under reflux. After a standing time of 16 hours at room temperature, the suspension is filtered and the filter cake is washed with distilled water, dried and ground. The NH₄ content of the sample is then determined according to Kjedahl.

### pH value

10 g of a dried sample is agitated in 100 ml distilled water for 30 minutes. After settling, the pH value of the clear supernatant is determined by means of a pH glass electrode.

### Specific surface / pore volume

The specific surface and the pore volume were determined with a fully automated nitrogen porosimeter of Micromeritics GmbH, Mönchengladbach, Germany, type ASAP 2010.

The sample is cooled in high vacuum to the temperature of liquid nitrogen. Then, nitrogen is continuously dosed into the sample chamber. By determination of the adsorbed amount of gas as a function of pressure, an adsorption isotherm is obtained at constant temperature. After pressure compensation the gas is removed step-by-step and a desorption isotherm is determined.

The specific surface is determined according to the BET method (one-point method with nitrogen according to DIN 66131).

The pore volume is determined from the obtained data according to the BJH method (E.P. Barret, L.G. Joyner, P.P. Haienda, J.Am.Chem.Soc. 73 (1951) 373. This method also accounts for effects due to capillary condensation. Pore volumina of particular ranges of pore diameter are obtained by summation of incremental pore volumina, obtained by analysis of the adsorption isotherm according to BJH. The total pore volume according to the BJH method refers to pores with a pore diameter within a range of 1.7 to 300 nm.

### Determination of particle size distribution according to Malvern

The particle size distribution was determined according to Malvern. A mastersizer from Malvern Instruments Limited, UK, was used according to the manufacturer's instructions. The measurements were carried out with the sample chamber provided ("dry powder feeder") in air and the values based on the sample volume (including the average particle size D₅₀) where determined.

### Presence of stevensite / saponite / kerolite

The presence of stevensite or kerolite in a material or mineral used was determined in conventional manner by X-ray diffraction.

X-ray diffraction was performed with a Philips X'Pert PW 3710 θ - 2θ diffractometer using Cu Kα-radiation. A 1° divergence aperture, a secondary monochromator and a spot detector were used. The range analyzed was from 2 - 80° 2θ and was determined with a step width of 0.02 2θ (3 sec per step).

### Mycotoxin solutions

Mycotoxins used in the following examples where purchased as crystalline pure substances (Sigma AG) and taken up in methanol (50 µg/ml). For the adsorption tests dilutions were prepared using buffer solutions (citrate buffer) to obtain a solution which contains 2000 µg of the particular mycotoxin.

Depending on the toxin, the solutions were adjusted to pH values between 3 and 5.5 by means of citrate buffer. For ochtratoxin, zearalenon and fumonisine, adsorption at pH 3 is analyzed because these toxins are stable under these conditions. For aflatoxin, pH 5.5 is employed because a rearrangement which disrupts the fluorescence spectroscopy detection occurs at lower pH values. For T2 toxin, the adsorption at pH 4.5 is analyzed because a conversion to H-T-2 toxin occurs below this pH. This compound is likewise poisonous but cannot be determined quantitatively as efficiently.

### Determination of mycotoxin concentration by HPLC

The HPLC determination was effected under the following conditions:

### Aflatoxins, ochratoxin and zearalenone

### Column: Spherisorb^{®} ODS-2 125 x 4 mm

The following parameters were used for detection of the particular mycotoxins:

Aflatoxin

| | |
|---|---|
| Derivatisation: | F₃CCOOH/CH₃COOH/H₂O 2:1:7 |
| Eluent: | water/acetonitrile/methanol 75/15/10 |
| Flow rate: | 1.2 ml/min |
| Detector: | Fluorescence |
| Wavelength: | EX 364 nm/EM 440 nm |

Ochratoxin and zearalenone:

| | |
|---|---|
| Eluent: | 570 ml of acetonitrile/410 ml of water/20 ml of acetic acid |
| Flow rate: | 1.0 ml/min |
| Detector: | Fluorescence |
| Wavelength: | EX 274 nm/EM 445 nm |

### T2 toxin

The supernatants from the adsorption and desorption tests are injected directly into the HPLC. An RP18 column with a Spheri-5 ODS 2 silica gel is used (manufacturer: Perkin Elmer). The particle size is 5 µm; the column dimensions are 4.6 x 250 mm. The mobile phase used is a water-methanol-acetonitrile mixture in a ratio of 250:100:100. A flow of 2 ml/min is established. The T2 toxin is detected by UV spectrometry at 200 nm.

### Fumonisine

The same HPLC column as already described for T2 toxin is used. The aqueous solution obtained after centrifugation which comprises fumonisine is first concentrated by evaporation to dryness and derivatized with naphthalene-decarboxyaldehyde to allow fluorescence detection of the fumonisine via the derivative as described in: Benett, Journal of the AOAC International, vol. 77, No. 2, 1994, pages 501 - 506. The mobile phase used is an acetonitrile-water-methanol-acetic acid mixture in a ratio of 45:49.3:4.8:0.9. A flow rate of 2.0 ml/min is established. The fumonisine is detected via a fluorescence at 500 mm, which is excited at 420 nm.

The percentage adsorption rates were calculated from the results.

### General procedure for determination of mycotoxin adsorption and desorption

Adsorption and desorption effectiveness were determined as follows:

### A) Adsorption

0.1/0.4 gram of the adsorbent was suspended in 25 ml mycotoxin solution. The mixture was stirred at a temperature of 37°C for 2 hours. The suspensions where then centrifuged at 2800 rpm for 5 minutes and the clear supernatant was analyzed by means of HPLC analysis for the residual content of unadsorbed mycotoxin. A difference between the amount of toxin initially charged and the amount of toxin still remaining in solution after adsorption corresponds to the amount absorbed and is reported below as percentage of the amount of toxin initially charged. The mean values of double determinations are reported in each case.

For comparison the example was repeated but using an amount of charcoal corresponding to the amount of charcoal contained in the adsorbent analyzed but not adding any clay.

### B) Desorption

In a subsequent test, desorption of toxins adsorbed in the first step is analyzed. For this end, the solid obtained after centrifugation of the suspension described in A) is resuspended in 25 ml of distilled water or citrate buffer and adjusted to pH 7. The now pH-neutral suspension is again stirred at 37°C for 2 hours and then centrifuged. The amount of desorbed toxin in the clear supernatant is determined by means of HPLC analysis as described above. The amount of toxin found in the solution is compared to the amount of toxin originally used in the adsorption test and reported below in % desorbed toxin.

In each example the mean value from double determinations is reported.

The values for the effective adsorption reported in each case in the tables correspond to the difference in % amount adsorbed minus % amount desorbed. In each case, the mean values from double determinations are reported.

A series of experiments were performed according to the above described general procedure.

The adsorbents summarized in table 1 were used in the examples:

**Table 1: Adsorbent compositions**

| ADSORBENT | COMPOSITION | Specific Surface | Total Pore Volume | CEC | pH | D[0.5] |
|---|---|---|---|---|---|---|
| | | m²/g | cc/g | mgNH⁴⁺/100g - | | µm |
| 1 | Ca-bentonite + organophilic bentonite 85/ 15 | 43 | 0.228 | 54 | 7.9 | 53.5 |
| 2 | Stevensite/ Kerolite/ Saponite 100 | 220 | 0.301 | 26 | 8.4 | 43.7 |
| 3 | Ca-bentonite +charcoal 98.5/ 1.5 | 96 | 0.322 | 62 | 8 | 52.1 |
| 4 | Ca-bentonite + S/K/S + charcoal 78.5/ 20/ 1.5 | 117 | 0.311 | 56 | 8.2 | 51.4 |
| 5 | Ca-bentonite + S/K/S + charcoal 68.5/ 30/ 1.5 | 131 | 0.310 | 52 | 8.3 | 50.4 |
| 6 | Ca-bentonite + S/K/S + organophilic bentonite + charcoal 73.5/ 20/ 5/ 1.5 | 113 | 0.297 | 53 | 8.2 | 49.9 |

### Adsorption of Zearalenon

For the examples the general procedure was used as described above with the following amendments:
Adsorption: 2 ppm Zearalenon, Citrate buffer pH 3
Desorption: citrate buffer pH 6.5
The results are summarized in table 2.

**Table 2: Adsorption of Zearalenon with different adsorbents**

| c | Adsorption % | Desorption % | Efficiency % |
|---|---|---|---|
| 0.4% Adsorbent | | | |
| Adsorbent 1 | 98 | 2 | 96 |
| Adsorbent 2 | 98 | 2 | 96 |
| Adsorbent 3 | 98 | 2 | 96 |
| Adsorbent 4 | 98 | 2 | 96 |
| Adsorbent 5 | 98 | 2 | 96 |
| Adsorbent 6 | 98 | 2 | 96 |

| 0.1% Adsorbent | | | |
|---|---|---|---|
| Adsorbent 1 | 80 | 5 | 75 |
| Adsorbent 2 | 80 | 9 | 71 |
| Adsorbent 3 | 56 | 2 | 54 |
| Adsorbent 4 | 98 | 2 | 96 |
| Adsorbent 5 | 98 | 2 | 96 |
| Adsorbent 6 | 86 | 2 | 84 |

### Adsorption of Aflatoxin B1

For the examples the general procedure was used as described above with the following amendments:
Adsorption: 2 ppm Aflatoxin B1, 0.2 pepsin pH 5.5
Desorption: water
The results are summarized in table 3.

**Table 3: Adsorption of Aflatoxin B1 with different adsorbents**

| | Adsorption % | Desorption % | Efficiency % |
|---|---|---|---|
| 0.4% Adsorbent | | | |
| Adsorbent 1 | 98 | 2 | 96 |
| Adsorbent 2 | 98 | 2 | 96 |
| Adsorbent 3 | 95 | 6 | 89 |
| Adsorbent 4 | 98 | 2 | 96 |
| Adsorbent 5 | 98 | 2 | 96 |
| Adsorbent 6 | 98 | 2 | 96 |

| 0.1% Adsorbent | | | |
|---|---|---|---|
| Adsorbent 1 | 90 | 6 | 84 |
| Adsorbent 2 | 98 | 2 | 96 |
| Adsorbent 3 | 85 | 10 | 74 |
| Adsorbent 4 | 98 | 2 | 96 |
| Adsorbent 5 | 98 | 2 | 96 |
| Adsorbent 6 | 98 | 2 | 96 |

### Adsorption of Ochratoxin with different adsorbents

The adsorption/desorption experiments were performed according to the general procedure described above. The results are summarized in table 4.

**Table 4: Adsorption of Ochratoxin with different adsorbents**

| | Adsorption % | Desorption % | Efficiency % |
|---|---|---|---|
| 0.4% Adsorbent | | | |
| Adsorbent 1 | 95 | 14 | 81 |
| Adsorbent 2 | 98 | 9 | 89 |
| Adsorbent 3 | 98 | 2 | 96 |
| Adsorbent 4 | 98 | 2 | 96 |
| Adsorbent 5 | 98 | 2 | 96 |
| Adsorbent 6 | 98 | 2 | 96 |

| 0.1% Adsorbent | | | |
|---|---|---|---|
| Adsorbent 1 | 72 | 36 | 36 |
| Adsorbent 2 | 94 | 35 | 59 |
| Adsorbent 3 | 49 | 7 | 42 |
| Adsorbent 4 | 97 | 19 | 78 |
| Adsorbent 5 | 98 | 12 | 86 |
| Adsorbent 6 | 87 | 19 | 68 |

### Adsorption of Endotoxins

In a further series of experiments adsorption of endotoxins was tested.

### Endotoxin solution

For the preparation of the Endotoxin solution a standard Endotoxin (E. coli 055.B5, art.no. 100098) was used. It was diluted with PBS (Phosphate Buffered Saline) to a concentration of about 5.10⁵ EU/ ml. 1 EU (Endotoxin Unit) corresponds to 100 pg of Endotoxin.

0.4 wt.% of the adsorbent was suspended in about 25 ml of the endotoxin solution. The suspension was held 2 h at 37 °C with gentle agitation. The mixture was centrifuged at 2800 rpm for 5 minutes and the clear supernatant was analyzed by means of a chromogenic Limulus Amoebocyte Lysate Test (LAL Test) for the residual content of unadsorbed endotoxin. A difference between the amount of toxin initially charged and the amount of toxin still remaining in solution after adsorption corresponds to the amount adsorbed.

For the LAL Test a LAL - Assay from Lonza Bioscience (Lot FL 125 G) was used. This is a standard test procedure for the quantitative determination of Endotoxin and is based on the fact that bacteria cause intravascular coagulation in the American horseshoe crab, Limulus polyphemus. The agent responsible for the clotting phenomena resided in the crab's amoebocytes, or circulating blood cells, and that bacterial Endotoxin triggered the turbidity and gel-forming reaction enzymatically. Thus Endotoxin causes opacity and gelation in Limulus amoebocytes lysate (LAL) which is based on an enzymatic reaction. This reaction causes also a yellow color to develop upon cleavage of the chromophore p-nitroaniline, what can be followed up in a spectrophotometer at 405 nm.

Details to the method and the theory can be found in the Enzyclopedia of Pharmaceutical Technology 2nd edition, Volume 3, page 2348ff (James Swarbrick, James C. Boylan, 2002).

The results are summarized in table 5.

**Table 5: Adsorption of endotoxins by several adsorbents**

| Adsorbent | Endotoxin EU/ml in supernatant |
|---|---|
| without | 278557 |
| Adsorbent 1 | 225417 |
| Adsorbent 3 | 191466 |
| Adsorbent 5 | 5390 |
| Activated Carbon | 0 |

## Claims

1. Adsorbent comprising a clay material and activated carbon.

2. Adsorbent according to claim 1, wherein the activated carbon is comprised in an amount of less than 10 % by weight of the adsorbent.

3. Adsorbent according to one of the preceding claims,
wherein the clay material comprises calcium bentonite.

4. Adsorbent according to one of the preceding claims,
wherein the clay material comprises at least one clay mineral selected from the group of stevensite, saponite and kerolite.

5. Adsorbent according to one of the preceding claims,
wherein the clay material is formed by at least two clay minerals.

6. Adsorbent according to claim 6, wherein a first clay mineral is comprised in the adsorbent in an amount of at least 20 % by weight.

7. Adsorbent according to claim 6 or 7, wherein a second clay mineral is comprised in the adsorbent in an amount of less than 80 % by weight.

8. Adsorbent according to one of the preceding claims,
wherein the clay material is formed from naturally active clay minerals.

9. Adsorbent according to one of the preceding claims,
wherein the activated carbon is made from plant material.

10. Adsorbent according to one of the preceding claims,
wherein the clay material comprises an organophilic clay material.

11. Animal feed comprising and adsorbent according to one of claims 1 to 11.

12. Animal feed according to claim 12, wherein the adsorbent is comprised in the animal feed in an amount of less than 5 % by weight.

13. Animal feed according to claim 12 or 13, wherein the animal feed is based on plants material comprising mycotoxins.

14. Use of an adsorbent according to one of claims 1 to 11 for the adsorption of microbial toxins.

15. Use according to claim 14, wherein the toxin is at least one toxin selected from the group of mycotoxins, endotoxins and enterotoxins.
